(19) Europäisches Patentamt
European Patent Office
Office européen des brevets

(11) **EP 1 904 350 B1**

(12) **EUROPÄISCHE PATENTSCHRIFT**

(45) Veröffentlichungstag und Bekanntmachung des Hinweises auf die Patenterteilung:
**26.03.2014 Patentblatt 2014/13**

(21) Anmeldenummer: **06776119.7**

(22) Anmeldetag: **04.07.2006**

(51) Int Cl.:
*B60T 8/172* (2006.01)     *B60T 8/48* (2006.01)
*B60T 13/52* (2006.01)     *F02D 13/04* (2006.01)

(86) Internationale Anmeldenummer:
**PCT/EP2006/006483**

(87) Internationale Veröffentlichungsnummer:
**WO 2007/006453 (18.01.2007 Gazette 2007/03)**

(54) **VERFAHREN ZUR BERECHNUNG DES UNTERDRUCKS IM BREMSKRAFTVERSTÄRKER EINES FAHRZEUGS MIT OTTO-MOTOR**

METHOD FOR CALCULATING THE LOW PRESSURE IN THE SERVOBRAKE OF A VEHICLE COMPRISING AN OTTO ENGINE

PROCEDE POUR CALCULER LA DEPRESSION DANS LE SERVOFREIN D'UN VEHICULE A MOTEUR A ALLUMAGE COMMANDE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **07.07.2005 DE 102005031734**

(43) Veröffentlichungstag der Anmeldung:
**02.04.2008 Patentblatt 2008/14**

(73) Patentinhaber: **GM Global Technology Operations LLC**
**Detroit, MI 48265-3000 (US)**

(72) Erfinder:
• **KIRMESS, Oliver**
**64560 Riedstadt (DE)**
• **HELMUT, Oswald**
**55234 Albig (DE)**
• **STEINMANN, Uwe**
**64293 Darmstadt (DE)**

(74) Vertreter: **Strauss, Peter**
**Adam Opel AG**
**Patentrecht, A0-02**
**65423 Rüsselsheim (DE)**

(56) Entgegenhaltungen:
**EP-A2- 0 967 131     EP-A2- 1 114 762**
**EP-A2- 1 270 308     DE-A1- 19 929 880**
**JP-A- 11 036 928     JP-A- 2002 145 044**

**Beschreibung**

Die vorliegende Erfindung betrifft ein Verfahren zur drucksensorlosen Ermittlung eines Drucks in einem mittels einer Betätigungsvorrichtung betätigten Bremskraftverstärker für ein Kraftfahrzeug zum optimierten Ausführen eines Bremsvorgangs gemäß dem Oberbergriff des Anspruchs 1. Die Efindung betrifft ferner einen Bremskraftverstärker.

Aus der DE 197 53 450 A1 ist ein Verfahren und eine Vorrichtung zur Erzeugung eines Unterdrucks in einem Motor bekannt. Der Motor umfasst einen Einlasspfad, Verbrennungskammern und einen Abgaspfad. Eine Luftströmung in dem Einlasspfad wird durch eine Drosselklappe gesteuert. Ein Abgasrückführungs-(EGR)-Durchlass lenkt einen Teil einer Strömung von dem Abgas von dem Abgaspfad zu dem Einlasspfad ab. Ein EGR-Ventil reguliert die Strömung von Abgas, das durch den EGR-Durchlass strömt. Ein Bremskraftverstärker ist mit dem Einlasspfad verbunden und erhöht die Bremskraft des Fahrzeugs. Ein Drucksensor erfasst den Druck in dem Verstärker. Eine zentral verarbeitende Einheit (CPU) bestimmt, ob der erfasste Druck höher als ein vorbestimmter Wert ist. Die Drosselklappe ist in einer relativ weit geöffneten Position, wenn der Motor eine geschichtete Verbrennung durchführt. Die Drosselklappe vermindert den Druck in dem Einlasspfad, wenn die Drosselklappe die Strömung einschränkt. Die CPU steuert die Drosselklappe, um den Druck in dem Einlasspfad zu vermindern, wenn der Verstärkerdruck höher als der vorbestimmte Wert ist, und sie betätigt das EGR-Ventil, um die Gasströmung in den EGR-Durchlass zu vermindern. Dies ergibt einen besseren Bremsen- und Motorbetrieb.

Das dort beschriebene Verfahren und die dort beschriebene Vorrichtung weisen den Nachteil auf, dass zur Optimierung der Steuerung des Unterdrucks ein Sensor zur Erfassung des Drucks in der Unterdruckkammer des Bremsverstärkers notwendig ist. Dieser Sensor kann eine Fehlerquelle darstellen und bei Ausfall dieses Sensors, ist dieser nur mit einigem Aufwand zu reparieren oder zu ersetzen.

Aus der EP 1 021 327 B1 ist eine Fahrzeugbremsanlage eines Kraftfahrzeugs bekannt, bei der Bremseinrichtungen an dessen Rädern über einen Hauptbremszylinder mit Druck beaufschlagbar sind, mit einem elektronisch steuerbaren Bremskraftverstärker mit einer Unterdruckkammer und einer Druckkammer, die durch eine bewegliche Wand voneinander getrennt sind, einer Steuerventilanordnung, die mittels einer elektromagnetischen Betätigungseinrichtung betätigbar ist, und durch die eine Druckdifferenz zwischen der Druck- und der Unterdruckkammer einstellbar ist, wobei die bewegliche Wand in Abhängigkeit von den Druckverhältnissen in der Unterdruckkammer und der Druckkammer ihre Position verändert und dabei einen Hauptbremszylinder betätigt, wobei die elektromagnetische Betätigungseinrichtung im Betrieb durch eine elektronische Steuereinheit mit Stromsignalen beschickt wird, die die elektronische Steuereinheit in Abhängigkeit von fahrdynamischen Zuständen oder externen Einflüssen erzeugt, die mit der elektrischen Steuereinheit verbundene Sensoren erfassen, und bei Vorliegen bestimmter fahrdynamischer Zustände oder externe Einflüsse oder Kombinationen davon, die die Betätigung des Hauptbremszylinders innerhalb eines vorbestimmten Zeitintervalls mit einer vorbestimmten Wahrscheinlichkeit erforderlich machen, die elektronische Steuereinheit Stromsignale für die elektromagnetische Betätigungseinrichtung erzeugt, so dass die Steuerventilanordnung in einem Masse betätigt wird, dass zumindest in dem Bremskraftverstärker vorhandene Spiel, Leerwege oder toleranzbedingte Totwege überwunden sind, wobei keine Betätigung der Bremseinrichtung erfolgt, die elektronische Steuereinheit einen Rechner zur Verknüpfung der durch die Sensoren erfassten Signale gemäss vorbestimmten Regeln, und einen Speicher zum Abspeichern der vorbestimmten Regeln sowie von während des Betriebs der Fahrzeugbremsanlage gewonnenen Erfahrungswerten aufweist, und die in dem Speicher abgespeicherten Erfahrungswerte Kombinationen von erfassten Sensorsignalen sowie von Wahrscheinlichkeitswerten sind, mit denen beim Vorliegen der jeweiligen Kombination von erfassten Sensorsignalen innerhalb eines Zeitintervalls in der Vergangenheit eine Bremsung ausgeführt wurde.

Die vorstehend aufgeführte Fahrzeugbremsanlage weist den Nachteil auf, dass lediglich die Betätigungsvorrichtung über eine elektronische Steuereinheit betätigt wird, wobei aber nicht der Bremsdruck je nach Fahrzeugsituation über vorgegebene Regeln steuerbar ist, so dass hier keine Bestimmung des Drucks in den Bremskammern erfolgt.

Ein gattungsgemäßes Verfahren zur drucksensorlosen Ermittlung eines Druckes in einem mittels einer Betätigungsvorrichtung betätigten Bremskraftverstärker für ein Kraftfahrzeug ist aus der EP 0 1 270 308 A2 bekannt. Das Verfahren umfasst unter anderem die Schritte:

-    Erfassen der Fahrsituation (Schritt 261: Bremspedalbetätigung BS)
-    Simulieren des Drucks in Abhängigkeit der Fahrsituation (Schritt 262: BE).

Das bekannte Verfahren überwacht die Fahrzeuggeschwindigkeit mittels einer Fahrzeuggeschwindigkeitserfassungseinrichtung. Im Zuge der Überwachung der Fahrzeuggeschwindigkeit wird ein vorbestimmter Schwellwert, bei dessen Erreichen oder Überschreiten während eines Bremsvorgangs ein Startvorgang des Verbrennungsmotors automatisch eingeleitet wird, an die Fahrzeuggeschwindigkeit angepasst. Bei dem erfindungsgemäßen Verfahren wird zumindest der Bremsverstellweg oder die Veränderungsrate des Bremsverstellweges erfasst und im Hinblick auf den Zeitpunkt des automatischen Startens des Verbrennungsmotors berücksichtigt. Bei dem erfindungsgemäßen Verfahren wird der Verbrennungsmotor automatisch wieder gestartet, bevor es zu einer tatsächlich Reduktion des Negativdruckes im Bremskraftverstärker kommt.

Auch die EP 1 114 762 A2, EP 0 967 131 A2, JP 2002 145044 A und JP 11 036928 A betreffen jeweils ein Verfahren, bei dem der Unterdruck im Bremskraftverstärker eines Kraftfahrzeuges durch Berechnung oder Schätzung ermittelt wird, ohne dass dazu ein Drucksensor notwendig ist.

Der Erfindung liegt die Aufgabe zugrunde, ein Verfahren zur drucksensorlosen Ermittlung eines Druckes in einem mittels einer Betätigungsvorrichtung betätigten Bremskraftverstärker für ein Kraftfahrzeug mit den eingangs genannten Merkmalen bereit zu stellen, welches gegenüber dem bisherigen Verfahren verbessert ist. Ferner soll ein entsprechender Bremskraftverstärker bereit gestellt werden.

Diese Aufgabe wird mit einem Verfahren gelöst, welches die Merkmale des Anspruches 1 aufweist. Ferner wird die Aufgabe mit einem Verfahren mit den Merkmalen des Anspruches 9 gelöst. Auch ist zur Lösung der Aufgabe ein Bremskraftverstärker mit den Merkmalen des Anspruches 10 vorgesehen. Vorteilhafte Weiterbildungen der Erfindung sind in den hiervon abhängigen Ansprüchen angegeben.

Die Erfindung schließt die technische Lehre ein, dass in einem Verfahren zur drucksensorlosen Ermittlung eines Drucks in einem mittels einer Betätigungsvorrichtung betätigten Brems-kraftverstärker ein Kraftfahrzeug zum optimierten Ausführen eines Bremsvorgangs die Schritte umfasst sind:

Erfassen der Fahrsituation und Simulieren des Drucks in Abhängigkeit von der Fahrsituation.

Diese Lösung bietet den Vorteil, dass zur Ermittlung des Unterdrucks oder allgemein des Drucks in Bremskraftverstärkern zur Anpassung des Drucks an die jeweilige Fahrsituation kein aufwendiger Drucksensor samt zugehöriger Verkabelung und eventueller Auswertungsbausteine im Motorsteuergerät mehr benötigt werden.

Weiter schließt die Erfindung die technische Lehre ein, dass bei einer Vorrichtung zur Verstärkung der Bremskraft in einem Kolben-kraftmotor betriebenen Kraftfahrzeug mit einer Betätigungseinrichtung und einer mit der Betätigungseinrichtung gekoppelten unterdruckabhängigen Kraftverstärkungsvorrichtung die Kraftverstärkungsvorrichtung unterdrucksensorlos ausgebildet ist, um eine Kraftverstärkungsvorrichtung in Abhängigkeit von dem Unterdruck drucksensorlos auszubilden.

Zudem schließt die Erfindung die technische Lehre ein, dass bei einem Bremskraftverstärker Mittel zur Durchführung des erfindungsgemäßen Verfahrens gegeben sind.

Durch die drucksensorlose Ermittlung des Drucks im Bremskraftverstärker ist die Fehleranfälligkeit bei Berechnung des Drucks auf Grund der Unabhängigkeit von Sensoren und eventuell weiteren Auswertungsbausteinen deutlich verringert.

Bevorzugt ist, dass das Erfassen des Fahrsituationsmodells die Schritte umfasst: Feststellen des Ausgangswertes des Drucks, Erfassen und Speichern von variablen Fahrsituationskennwerten und Definieren von festen Fahrsituationskennwerten.

Durch diese Schritte kann das Modell, was als Grundlage für die Berechnung des Druckes dient ständig wechselnden Situationen angepasst und/oder erweitert werden und auch als automatisch applizierbares System ausgebildet werden.

Nach der Erfindung ist vorgesehen, dass das Simulieren des Druckes Schritte umfasst: Initialisieren des Drucks, Überprüfen und Signalisieren, ob eine Betätigungsvorrichtung betätigt wird, Berechnen des Drucks in Abhängigkeit von den Fahrsituationskennwerten und der Betätigung der Betätigungsvorrichtung, Festlegen des Drucks in Abhängigkeit der durchgeführten Berechnung.

So kann je nach Fahrsituation ein entsprechender Druck bereitgestellt werden, so dass stets ein Optimum an Bremskraftverstärkung realisiert werden kann.

Vorzugsweise sind die Fahrsituationskennwerte ausgewählt aus der Gruppe umfassend: Saugrohrdruck, Bremslichtschaltersignal, Bremsschaltersignal, Fahrzeuggeschwindigkeit, Umgebungsdruck, Fahrzeugbeschleunigung, Drehmoment, Motordrehzahl und Gang.

Auch ist bevorzugt, dass bei Betätigen der Betätigungsvorrichtung und somit indirekt des Brems- und/oder des Bremslichtschalters die Fahrzeuggeschwindigkeit überwacht wird und mindestens ein variabler Fahrsituationskennwert für den optimierten Bremsvorgang berechnet wird.

Insbesondere kann der variable Fahrsituationskennwert die Verzögerung sein.

Bevorzugt ist, dass bei aktiviertem Bremsschalter in Abhängigkeit von der Verzögerung der Druck erhöht wird.

Ein fester Fahrsituationskennwert ist der Wert für die Verzögerung bei einer Vollbremsung sein, welcher vorbestimmt ist.

Zudem ist bevorzugt, dass bei Unterschreiten der Fahrzeuggeschwindigkeit unter einen Grenzwert bei Aktivieren der Betätigungsvorrichtung ein Bremsunterdruckabbau beziehungsweise eine Druckerhöhung, der einer Vollbremsung entspricht, simuliert wird.

Auch bevorzugt ist, dass wenn der Druck in dem Bremskraftverstärker grösser als ein Saugdruck in dem Motor wird, der Druck auf das Saugrohrdruckniveau herabgesetzt wird.

Weiter bevorzugt ist es, dass bei einem Verfahren zum Betreiben einer Bremsanlage für ein Kraftfahrzeug mit einem drucksensorlosen Bremsverstärker zur Berechnung des Drucks in dem Bremskraftverstärker ein Verfahren gemäss dem Vorstehenden umfasst ist, um einen optimierten Bremsvorgang auszuführen.

Bevorzugt ist auch eine Vorrichtung zur Verstärkung der Bremskraft in einem ottomotorbetriebenen Kraftfahrzeug mit einer Betätigungseinrichtung und einer mit der Betätigungseinrichtung gekoppelten unterdruckabhängigen Kraftverstärkungsvorrichtung, wobei die Kraftverstärkungsvorrichtung unterdrucksensorlos ausgebildet ist.

Auf diese Weise lässt sich eine weniger aufwendige Kraftverstärkungsvorrichtung mit weniger störanfälligen Teilen realisieren.

Insbesondere ist bevorzugt, dass die Kraftverstärkungsanlage als Bremskraftverstärker mit Mitteln zur Durchführung des erfindungsgemässen Verfahrens ausgebildet ist. Das Verfahren kann beispielsweise als Schaltkreis oder auch als Computerprogrammprodukt realisiert werden.

Zur Realisierung des Verfahrens werden insgesamt verschiedene Eingangsgrößen benötigt. Das Modell zur Durchführung des Verfahrens benötigt so zum Beispiel fünf Eingangsgrößen. Diese sind ausgewählt aus der Gruppe umfassend Druck im Saugrohr, Bremslichtbetätigungsbit, Bremsbit, Fahrzeuggeschwindigkeit und Luftdruck der Umgebung.

Als Ausgangsgröße liefert das Modell den simulierten Druck im Bremskraftverstärker.

Damit das Verfahren flexibel anpassbar an verschiedene Situationen ist, verwendet das Modell diverse Kalibriergrößen. Diese sind ausgewählt aus der Gruppe umfassend: Volumenfaktor Bremskraftverstärker (nachfolgend $K_1$), Limit für Geschwindigkeitsabhängigkeit (nachfolgend $K_2$), minimale simulierte Bremsdruck-Erhöhung, falls das Bremslichtbetätigungsbit aktiviert ist (nachfolgend $K_3$), minimale simulierte Bremsdruck-Erhöhung wenn das Bremsbit aktiviert ist (nachfolgend $K_4$), Fahrzeugverzögerungsfaktor bei Vollbremsung (nachfolgend $K_5$), Glättungsfaktor Druckausgleich simulierter Bremsdruck in Abhängigkeit vom Druck im Saugrohr (nachfolgend $K_6$).

Das Verfahren startet mit einer Initialisierung, das heißt der simulierte Bremsdruck wird auf einen Ausgangswert gesetzt. Die Simulation erfolgt in Echtzeit, dass heißt die Zeitschritte der Simulation sind identisch mit den Zeitschritten von verwendeten Messungen. Grundsätzlich bleibt der simulierte Bremsdruck solange konstant auf dem Ausgangswert, bis einer der folgenden Fälle auftritt:

1. der Druck im Saugrohr wird kleiner als der simuliere Bremsdruck, das heißt genauer, der Saugrohrdruck sinkt unter den Druck im Bremskraftverstärker, oder

2. das Bit für Bremslicht oder Bremse ändert sich von 1 auf 0, das bedeutet das Bremspedal wird gelöst.

In diesen Fällen ändert sich der simulierte Bremsdruck wie folgt, in Abhängigkeit von den Fällen:

Im ersten Fall verringert sich der simulierte Bremsdruck über eine gleitende Mittelwertbildung gleichmäßig nach folgender Formel:
$BP_{i+1}=BP_i-K_6\cdot(BP_i-MAP_i)$, wobei BP für den simulierten Bremsdruck, $K_6$ für den oben benannten Kalibrierfaktor und MAP für den Druck im Saugrohr stehen. $K_6$ liegt hierbei im Bereich 0 bis 1. Bei der Berechnung des simulierten Bremsdrucks wird somit die Trägheit beim Druckausgleich beachtet. Ist $K_6$ null, dann findet kein Druckausgleich statt, ist $K_6$ 1 dann findet ein unmittelbarer Druckausgleich statt.

Im zweiten Fall unterscheidet man zusätzlich, ob die Fahrzeuggeschwindigkeit eine kritische Geschwindigkeit überschreitet. Die kritische Geschwindigkeit wird hier über den oben benannten Kalibrierfaktor $K_2$ berücksichtigt.

Falls also die Fahrzeuggeschwindigkeit unterhalb der kritischen Geschwindigkeit liegt, wie beispielsweise beim Stand oder bei Schrittgeschwindigkeit, wird falls während des Bremsvorgangs das Bremslichtbit 1 war, der simulierte Bremsdruck unter Annahme einer Vollbremsung nach folgender Formel heraufgesetzt: $BP_{i+1} = BP+K_1\cdot(AMP-BP_i)$, wobei

$K_1$ sich prinzipiell nach folgender Formel berechnet: $K_1 = \dfrac{V_{Arb,\text{max}}}{V_{ges}}$, wobei $V_{arb,max}$ dem Volumen der Arbeitskammer im Bremskraftverstärker bei Vollbremsung entspricht und $V_{ges}$ dem Gesamtvolumen des Bremskraftverstärkers entspricht. $K_1$ stellt somit die Kalibriergröße Volumenfaktor Bremskraftverstärker dar. AMP entspricht hierbei dem Luftdruck der Umgebung.

Falls während des Bremsvorgangs das Bremsbit 0 war, wird der simulierte Bremsdruck unter Annahme einer sehr leichten Bremsung heraufgesetzt, und zwar nach folgender Formel:
$BP_{i+1} = BP_i+K_1\cdot K_3\cdot(AMP-BP_i)$, wobei $K_3$ der oben benannten Kalibriergröße minimale simulierte Bremsdruck-Erhöhung wenn nur Bremslichtbit aktiviert ist entspricht. $K_3$ liegt im Bereich zwischen 0 und 1 und kann zum Beispiel den Wert 0,2 annehmen.

Für den Fall, dass die Fahrzeuggeschwindigkeit einen Wert hat, der gleich oder über dem Kalibrierfaktor Limit für Geschwindigkeitsabhängigkeit liegt, dann wird der simulierte Bremsdruck entsprechend der berechneten maximalen Verzögerung des Fahrzeugs während des Bremsvorgangs heraufgesetzt, und zwar wie folgt:

$$BP_{i+1} = BP_i + K_1 \cdot \alpha \cdot (AMP - BP_i), \quad \text{mit} \quad \alpha = \min\left( \frac{\max\limits_{Bremsvorgang} (VS_{x-0{,}05} - VS_x)}{K_5}, K_3 \right).$$

(VSx-0,05-VSx) stellt dabei die Geschwindigkeitsdifferenz zweier Abtastungen im Abstand 0,05 Sekunden dar und $K_5$ stellt diese Differenz bei Vollbremsung dar, entspricht also der Kalibriergröße Fahrzeugverzögerung bei Vollbremsung. $K_3$ (oben benannte Kalibriergröße) entspricht dem minimalen Wert von $\alpha$, der sich mindestens einstellt, wenn das Bremsbit 0 ist während des Bremsvorgangs. Falls das Bremsbit 1 ist, wird statt $K_3$ die Kalibriergröße $K_4$ (minimale simulierte Bremsdruck-Erhöhung, wenn Bremsbit aktiviert ist), als minimaler Wert verwendet, wobei $K_4 >= 0$ und $<=1$ sein kann, beispielsweise 0,3. In diesem Fall ändert sich vorstehende Formel wie folgt:

$$\alpha = \min\left( \frac{\max\limits_{Bremsvorgang} (VS_{x-0{,}05} - VS_x)}{K_5}, K_4 \right).$$

Hierbei wird die Fahrzeuggeschwindigkeit immer zu Beginn des Bremsvorgangs betrachtet, das heißt wenn sich das Bremslichtbit oder das Bremsbit von 0 auf 1 ändert.

Weitere, die Erfindung verbessernde Maßnahmen sind in den Unteransprüchen angegeben oder werden nachstehend gemeinsam mit der Beschreibung mehrerer bevorzugter Ausführungsbeispiele der Erfindung anhand der Figur näher dargestellt. Es zeigt:

Fig. 1    eine Schemazeichnung des Verfahrens zum Berechnen des Drucks in einem Bremskraftverstärker mit mehreren Untermodellen;

Fig. 2    eine Schemazeichnung eines ersten Untermodells (maximale Verzögerung);

Fig. 3    eine Schemazeichnung eines zweiten Untermodells (Bremsdruckangleichung); und

Fig. 4    eine Schemazeichnung für ein drittes Untermodell (Bremsdetektor).

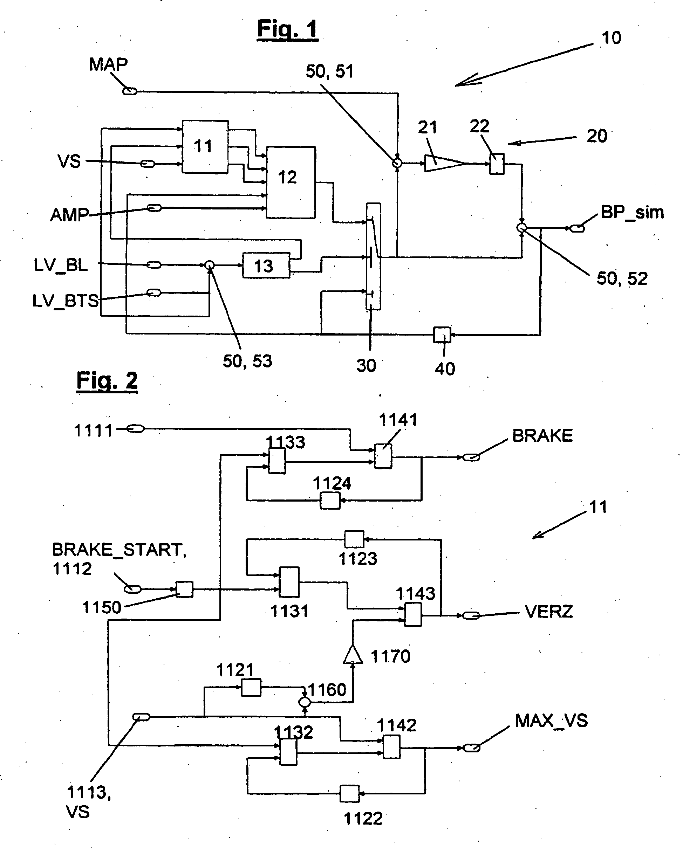

Figur 1 zeigt ein Modell 10 bzw. eine schematische Zeichnung des Verfahrens zur drucksensorlosen Berechnung eines Drucks in einem Bremskraftverstärker. Das Modell 10 umfasst mehrere Untermodelle, wobei hier drei Untermodelle - erstes Untermodell 11 für die maximale Verzögerung, zweites Untermodell 12 für den Bremsdruckausgleich und drittes Untermodell 13 als Bremsdetektor - dargestellt sind. Weiter umfasst das Modell 10 einen Mittelwertbilder 20, welcher wiederum einen Verstärker 21 und ein Saturationsbauteil 22 aufweist. Zudem umfasst das Modell 10 einen Schalter 30 und ein Halteglied 40 und verschiedene Rechenglieder 50, wobei die Rechenglieder einen ersten Addierer 51, einen zweiten Addierer 52 und einen dritten Addierer 53 umfassen.

In das Modell 10 gehen mehrere, hier fünf, Modell-Eingangssignale ein. Ein erstes Modell-Eingangssignal MAP gibt den Druck im Saugrohr - den Saugrohrdruck - in hPa an. Ein zweites Modell-Eingangssignal LV_BLS - Bremslichtbit - gibt binär an, ob ein Bremslicht eingeschaltet oder ausgeschaltet ist, wobei der Wert 1 für eingeschaltet steht. Ein drittes Modell-Eingangssignal LV_BTS - Bremsbit - gibt binär an, ob eine Bremse betätigt ist oder unbetätigt ist, wobei der Wert 1 für Bremse betätigt steht. Ein fünftes Modell-Eingangssignal VS - Fahrzeuggeschwindigkeit - gibt die Fahrzeuggeschwindigkeit in km/h an. Ein fünftes Modell-Eingangssignal AMP - Luftdruck der Umgebung-gibt den Luftdruck der Umgebung in hPa an.

Als Modell-Ausgangssignal BP_sim - simulierter Druck im Bremskraftverstärker - liefert das Modell 10 den simulierten Bremsdruck im Bremskraftverstärker in hPa.

Das erste Eingangssignal MAP geht direkt in den zweiten Addierer 52 ein.

Das zweite Eingangssignal LV_BLS geht direkt in den dritten Addierer 53 ein.

Das dritte Eingangssignal LV_BTS geht sowohl in den dritten Addierer 53 ein als auch in das erste Untermodell 11.

Der dritte Addierer 53 liefert als dritte-Addierer-Ausgangssignal BTS_plus_BLS die Summe der ersten Eingangsgröße und der zweiten Eingangsgröße.

Das vierte Eingangssignal VS geht direkt in das erste Untermodell 11 ein.

Das fünfte Eingangssignal AMP geht direkt in das zweite Untermodell 12 ein.

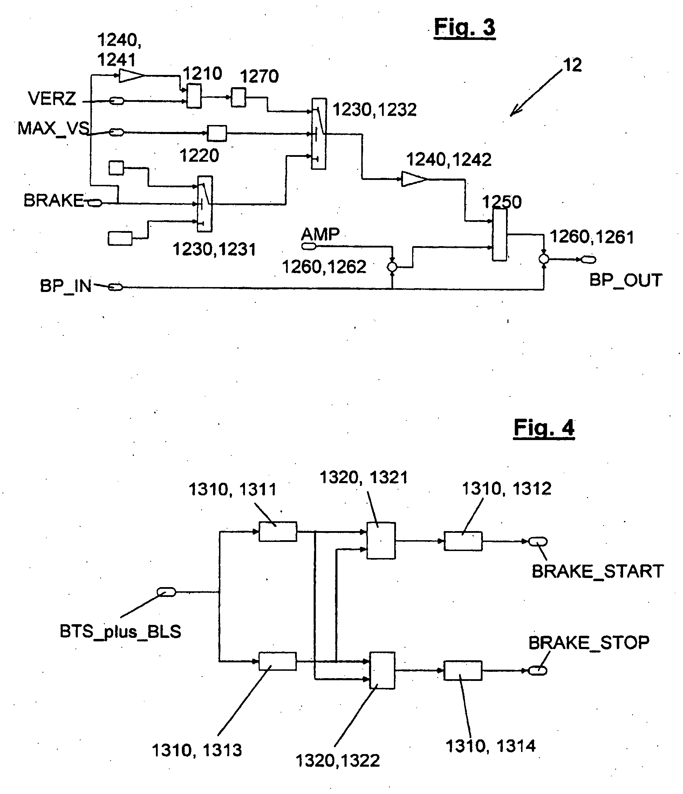

Zur besseren Übersicht werden zunächst die in Fig. 2 bis Fig. 4 beschriebenen Untermodelle 11, 12, 13 beschrieben, bevor das Modell 10 weiter beschrieben wird. Dabei wird zunächst aus Gründen der Übersichtlichkeit das dritte Untermodell 13 beschrieben, welches in Fig. 4 dargestellt ist.

Fig. 4 zeigt das dritte Untermodell 13, welches einen Bremsdetektor modelliert. Als Eingangssignal weist das dritte Untermodell 13 das dritte-Addierer-Ausgangssignal BTS_plus_BLS auf.

Das dritte Untermodell 13 umfasst mehrere dritte-Untermodell-Detektorbauteile 1310, wobei hier vier dritte-Untermodell-Detektorbauteile 1311, 1321, 1331, 1341 umfasst sind.

Weiter weist das dritte Untermodell 13 mehrere dritte-Untermodell-Integratorbauteile 1320 auf, wobei hier zwei dritte-Untermodell-Integratorbauteile 1321, 1322 umfasst sind.

Das Eingangssignal des dritten Untermodells 13 BTS_plus_BLS wird verzweigt und geht in die ein erstes und ein zweites dritte-Untermodell-Detektorbauteil 1311 und 1313 ein.

In dem ersten dritte-Untermodell-Detektorbauteil 1311 wird festgestellt, ob das Eingangss.ignal anwächst.

In dem zweiten dritte-Untermodell-Detektorbauteil 1313 wird festgestellt, ob das Eingangssignal absinkt.

Wenn in dem ersten dritte-Untermodell-Detektorbauteil 1311 ein Anstieg des Signals festgestellt wird, wird dieses verzweigt und geht in das erste und zweite dritte-Untermodell-Integratorbauteil 1321, 1322 ein..

Wenn in dem zweiten dritte-Untermodell-Detektorbauteil 1312 ein Absinken des Signals festgestellt wird, wird dieses verzweigt und geht ebenfalls in das erste und zweite dritte-Untermodell-Integratorbauteil 1321, 1322 ein.

Die dritte-Untermodell-Integratorbauteile 1321 und 1322 summieren die Signale und geben jeweils ein weiteres Signal aus, welches entsprechend in ein drittes beziehungsweise viertes dritte-Untermodell-Detektorbauteil 1312 und 1314 eingeht. Dort wird analog zu dem ersten bzw. zweiten dritte-Untermodell-Detektorbauteil 1311 bzw. 1313 ein Anstieg bzw. ein Absinken des Signals festgestellt und dementsprechend die dritte-Untermodell-Ausgangssignale BRAKE_START und BRAKE_STOP gesetzt. BRAKE_START ist genau dann 1, wenn das dritte-Untermodell-Eingangssignal BTS_plus_BLS ansteigt (d.h. das Bremsbit oder das Bremslichtbit von 0 auf 1 geht), ansonsten ist BRAKE_START 0. BRAKE_STOP ist genau dann 1, wenn BTS_plus_BLS absinkt (d.h. das Bremsbit oder das Bremslichtbit von 1 auf 0 geht), ansonsten ist BRAKE_STOP 0. BRAKE_START signalisiert also den Beginn eines Bremsvorgangs, BRAKE_STOP das Ende eines Bremsvorgangs.

Dieses dritte-Untermodell-Ausgangssignal BRAKE_Start geht nun zum einen in den Schalter 30 ein und zum anderen in das erste Untermodell 11 als zweites erste-Untermodell-Eingangssignal BRAKE_START. Das erste Untermodell ist in Fig. 2 dargestellt.

Fig. 2 zeigt das erste Untermodell 11. Das erste Untermodell 11 weist drei erste-Untermodell-Eingangssignale auf: erstes erste-Untermodell-Eingangssignal 1111, zweite erste-Untermodell-Eingangssignal 1112 und drittes erste-Untermodell-Eingangssignale 1113.

Das erste erste-Untermodell-Eingangssignal 1111 ist das dritte Eingangsignal LV_BTS.

Das zweite erste-Untermodell-Eingangssignal 1112 ist das dritte-Untermodell-Ausgangssignal BRAKE_START.

Das dritte erste Untermodell-Eingangssignal 1113 ist das vierte Eingangssignal VS.

Weiter weist das erste Untermodell 11 drei Ausgangsgrößen auf: die erste erste-Untermodell-Augangsgröße BRAKE, die zweite erste-Untermodell-Augangsgröße VERZ und die dritte erste-Untermodell-Ausgangsgröße MAX_VS.

Zudem umfasst das erste Untermodell 11 erste-Untermodell-Halte-1120,-Produkt- 1130, -Maximum- 1140, -Negations- 1150 und -Addierglieder 1160 oder bei letzterem einfach -Addierer.

Das erste Untermodell 11 umfasst genauer vier erste-Untermodell-Halteglieder 1121, 1122, 1123, 1124, drei erste-Untermodell-Produktglieder 1131, 1132, 1133, drei erste-Untermodell-Maximumglieder 1141, 1142, 1143, ein erste-Untermodell-Negationsglied 1150, einen erste-Untermodell-Addierer 1160 und einen erste-Untermodell-Verstärker 1170.

Das erste erste-Untermodell-Eingangssignal 1111 geht in ein erstes erste-Untermodell-Maximumglied 1141 ein.

Das zweite erste-Untermodell-Eingangssignal 1112, welches als Triggersignal ausgebildet ist, und nur dann gleich 1 gesetzt ist, wenn die Bremse oder das Bremslicht aktiviert werden, geht in das erste-Untermodell-Negationsglied 1150 ein und wird dort binär umgekehrt, das heißt 0 gesetzt, wenn das zweite erste-Untermodell-Eingangssignale 1112 1 war und umgekehrt.

Somit werden die drei erste-Untermodell-Ausgangsgrößen BRAKE, VERZ, MAX_VS bei einem Bremsstart auf 0 zurück gesetzt. Das negierte zweite erste-Untermodell-Eingangssignal geht weiter in ein erstes, zweites und drittes erste-Untermodell-Produktglied 1131, 1132, 1133 ein.

Die dritte erste-Untermodell-Eingangsgröße 1113 bzw. VS wird verzweigt und geht in ein erstes erste-Untermodell-Halteglied 1121, in einen ersten erste-Untermodell-Addierer 1160 und ein zweites erste-Untermodell-Maximumglied 1142 ein.

In das zweite Maximumglied 1142 geht ebenfalls die negierte und in dem dritten Produktglied multiplizierte Eingangsgröße 1112 ein.

Das Ausgangssignal des zweiten Maximumglieds 1142 wird rückgekoppelt und geht über das zweite Halteglied 1122 in das zweite Produktglied 1132.

Das zweite Maximumglied 1142 liefert als drittes erste-Untermodell-Ausgangssignal MAX_VS die maximale Geschwindigkeit während des aktuellen Bremsvorgangs.

Von dem Halteglied 1121, wo die Eingangsgröße oder das Eingangssignal VS etwa 0,05 Sekunden gehalten (entsprechend der Abtastrate) wird und erst danach weiter geleitet wird, gelangt die Eingangsgröße VS ebenfalls in den Addierer 1160. Der Addierer 1160 leitet die Summe weiter an den Verstärker 1170. Von dort gelangt das verstärkte Signal in das dritte Maximumglied 1143.

In das dritte Maximumglied 1143 geht das negierte und in dem ersten Produktglied 1131 erzeugte zweite Eingangssignal 1112 ein.

Den Wert den das dritte Maximumglied 1143 liefert ist das zweite Ausgangssignal VERZ und gibt die Verzögerung an.

Dieses Ausgangssignal VERZ wird über das dritte Halteglied 1123 mit dem ersten Produktglied 1131 rückgekoppelt.

Beim Vergleich der aktuellen Verzögerung mit der vorangegangenen Verzögerung wird immer der größere Wert weitergegeben. Diese liegt zwischen 0 und 1, wobei 0 keine Verzögerung und 1 eine Vollbremsung bedeutet. VERZ stellt also die maximale Verzögerung während des aktuellen Bremsvorgangs dar.

Das negierte zweite Eingangssignal 1112 geht weiter in das dritte Produktglied 1133 ein. Dieses gibt ein Signal an das erste Maximumglied 1141 weiter, wo es mit dem ersten Eingangssignal 1111 verglichen wird. Als Ergebnis wird die zweite Ausgangsgröße BRAKE erzeugt. Die zweite Ausgangsgröße beträgt dabei 1, wenn seit dem letzten Bremsstart der Bremsschalter aktiv war. Diese zweite Ausgangsgröße BRAKE wird über ein viertes Halteglied 1124 mit dem dritten Produktglied 1133 rückgekoppelt.

Die drei Ausgangssignale BRAKE, VERZ, MAX_VS des ersten Untermodells 11 gehen in das zweite Untermodell 12 ein. Zudem gehen in das zweite Untermodell 12 das fünfte Eingangssignal AMP ein, sowie das rückgekoppelte Ausgangssignal BP_SIM. Das zweite Untermodell 12 ist in Fig. 3 dargestellt.

Fig. 3 zeigt das zweite Untermodell 12.

Das zweite Untermodell 12 weist vier zweite-Untermodell-Eingangsgrößen auf, erste Eingangsgröße VERZ, zweite Eingangsgröße BRAKE, dritte Eingangsgröße MAX_VS sowie vierte Eingangsgröße BP_IN.

Weiter weist das zweite Untermodell 12 ein Maximumglied 1210, ein Rechenglied 1220, zwei Schalter 1230, zwei Verstärker 1240, ein Produktglied 1250, zwei Addierer 1260 und ein Saturationsglied 1270.

Die erste Eingangsgröße VERZ geht in das Maximumglied 1210.

Die zweite Eingangsgröße BRAKE wird verzweigt und geht über einen ersten Verstärker 1241 mit dem Verstärkungsfaktor $K_4$ (oben benannte Kalibriergröße) ebenfalls in das Maximumglied 1210 und in einen ersten Schalter 1231.

Das erste Maximumglied 1211 erzeugt ein Signal, das in das Saturationsglied 1270 eingeht. Die Untergrenze des Saturationsgliedes wird durch die Kalibriergröße $K_3$ bestimmt. 1270 erzeugt ein Saturationsglied-Ausgangssignal, welches an den zweiten Schalter 1232 weitergeleitet wird. Das geschaltete Schalter-Ausgangssignal gelangt zu einem zweiten Verstärker 1242 und von dort in das Produktglied 1250. Von dort gelangt es zu einem ersten Addierer 1261, welcher als Ausgangsgröße das zweite-Untermodell-Ausgangssignal BP_OUT liefert.

Das dritte Eingangssignal MAX_VS geht in das Rechenglied 1220 ein. Dieses Rechenglied 1220 vergleicht das dritte Eingangssignal MAX_VS mit einem vorgegeben Wert und liefert ein erstes-Rechenglied Ausgangssignal, welches weitergeleitet wird an den zweiten Schalter 1232.

Das vierte Eingangssignal BP_IN wird verzweigt und geht einmal in den ersten Addierer 1261 und einmal in den zweiten Addierer 1262.

In dem zweiten Addierer 1262 wird es mit dem fünften Eingangssignal AMP summiert und geht in das Produktglied 1250 ein.

Das Produktglied 1250 liefert ein Signal an den ersten Addierer 1261, welches mit dem vierten Eingangssignal BP_IN addiert wird und so das zweite-Untermodell-Ausgangssignal BP_out liefert.

In Fig. 1 liegt nun an dem Schalter BP_OUT, BRAKE_STOP und BP_SIM an. Das von dem Schalter geschaltete Signal BP wird verzweigt und geht in zwei Addierer wo es einerseits mit der ersten Eingangsgröße addiert wird, verstärkt wird und saturiert wird und dann in den zweiten Addierer eingeht, wo es mit dem Signal BP addiert wird. Das Ergebnis stellt den simulierten Druck BP_SIM dar. Dieser Wert wird rückgekoppelt.

Das Verfahren zur Simulation des Drucks im Bremskraftverstärker kann unter Heranziehen von zusätzlichen Eingangsgrößen um eine Steigungserkennung erweitert werden. Dann werden zusätzlich zu den auf Seite 7, Zeile 15ff, angegebenen Eingangsgrößen die Fahrzeugbeschleunigung, Drehmoment, Motordrehzahl und Gang benötigt. Mit der Steigungserkennung wird die Simulation des Drucks BP_SIM für Fahrt auf nicht ebener Strecke verbessert, da die Verzögerung VERZ auch von der Steigung der Fahrstrecke abhängt.

Die Steigung wird nach folgendem Prinzip bestimmt:

Aus Drehmoment und Motordrehzahl wird die vom Motor abgegebene Leistung berechnet, aus Geschwindigkeit und Gang wird die Leistung berechnet, die für den Fahrwiderstand auf ebener Strecke verbraucht wird. Daraus wird die Sollbeschleunigung des Fahrzeugs auf ebener Strecke bestimmt. Aus der Differenz der Sollbeschleunigung zur tatsächlichen Fahrzeugbeschleunigung folgert man die Steigung, die dann in die Berechnung der zweiten erste-Untermodell-Ausgangsgröße VERZ mit einfließt.

**Bezugszeichenliste**

| | |
|---|---|
| **10** | Modell |
| **11** | erstes Untermodell |
| **12** | zweites Untermodell |
| **13** | drittes Untermodell |
| **20** | Mittelwertbilder |
| **21** | Verstärker |
| **22** | Saturationsbauteil |
| **30** | Schalter |
| **40** | Halteglied |
| **50** | Rechenglieder |
| **51** | erster Addierer |
| **52** | zweiter Addierer |
| **53** | dritter Addierer |
| **MAP** | erste Modell-Eingangsgröße |
| **LB_BLS** | zweite Modell-Eingangsgröße |
| **LV_BTS** | dritte Modell-Eingangsgröße |
| **VS** | vierte Modell-Eingangsgröße |
| **AMP** | fünfte Modell-Eingangsgröße |
| **BP_sim** | Modell-Ausgangsgröße |
| **BTS_plus_BLS** | dritte-Addierer-Ausgangssignal |
| **1310** | Dritte-Untermodell-Detektorbauteile |
| **1311** | Erste Dritte-Untermodelldetektorbauteil |
| **1312** | Zweite Dritte-Untermodelldetektorbauteil |
| **1313** | Dritte Dritte-Untermodelldetektorbauteil |
| **1314** | Vierte Dritte-Untermodelldetektorbauteil |
| **1320** | Dritte Untermodell-Integratorbauteile |
| **1321** | 1. Dritte Untermodell-Integratorbauteile |
| **1322** | 2. Dritte Untermodell-Integratorbauteile |
| **BRAKE_START** | Erstes Dritte-Untermodell-Ausgangssignal |
| **BRAKE_STOP** | Zweites Dritte-Untermodell-Ausgangssignal |
| **1111** | Erstes erste-Untermodell-Eingangssignal |
| **1112** | Zweites erste-Untermodell-Eingangssignal |
| **1113** | Drittes erste-Untermodell-Eingangssignal |
| **BRAKE** | Erste erstes-Untermodell-Ausgangsgröße |
| **VERZ** | Zweite erstes-Untermodell-Ausgangsgröße |
| **MAX_VS** | Dritte erstes-Untermodell-Ausgangsgröße |
| **1120** | Erste-Untermodell Halteglieder |
| **1121** | Erstes Erste-Untermodell Halteglied |
| **1122** | Zweites Erste-Untermodell Halteglied |
| **1123** | Drittes Erste-Untermodell Halteglied |
| **1124** | Viertes Erste-Untermodell Halteglied |
| **1130** | Erste-Untermodell-Produktglieder |
| **1131** | Erstes Erste-Untermodell-Produktglieder |
| **1132** | Zweites Erste-Untermodell-Produktglieder |

**EP 1 904 350 B1**

| 1133 | Drittes Erste-Untermodell-Produktglieder |
| 1140 | Erste-Untermodell Maximumglieder |
| 1141 | Erstes Erste-Untermodell Maximumglied |
| 1142 | Zweites Erste-Untermodell Maximumglied |
| 1143 | Drittes Erste-Untermodell Maximumglied |
| 1150 | Erste-Untermodell-Negationsglied |
| 1160 | Erste-Untermodell-Addierer |
| 1170 | Erste-Untermodell-Verstärker |
| BP_IN | Vierte zweite Untermodell-Eingangsgröße |
| 1210 | Zweite Untermodell Maximumglieder |
| 1220 | Zweite Untermodell Rechenglieder |
| 1221 | Erstes Zweite Untermodell Rechenglieder |
| 1222 | Zweites Zweite Untermodell Rechenglieder |
| 1223 | Drittes Zweite Untermodell Rechenglieder |
| 1230 | Zweite Untermodell Schalter |
| 1231 | Erster Zweite Untermodell Schalter |
| 1242 | Zweiter Zweite Untermodell Schalter |
| 1240 | Zweite Untermodell Verstärker |
| 1241 | Erster Zweite Untermodell Verstärker |
| 1242 | Zweiter Zweite Untermodell Verstärker |
| 1250 | Zweite Untermodell Produktglied |
| 1260 | Zweite Untermodell Addierer |
| 1261 | Erste Zweite Untermodell Addierer |
| 1262 | Zweite Zweite Untermodell Addierer |
| 1270 | Zweite Untermodell Saturationsglied |
| BP_OUT | Zweites Zweite-Untermodell-Ausgangssignal |
| K_1 | Erste Kalibriergröße |
| K_2 | Zweite Kalibriergröße |
| K_3 | Dritte Kalibriergröße |
| K_4 | Vierte Kalibriergröße |
| K_5 | Fünfte Kalibriergröße |
| K_6 | Sechste Kalibriergröße |

**Patentansprüche**

1. Verfahren zur drucksensorlosen Ermittlung eines Drucks in einem mittels einer Betätigungsvorrichtung betätigten Bremskraftverstärker für ein Kraftfahrzeug mit Motoranlage umfassend ein saugrohrdruckbeaufschlagtes Saugrohr zum optimierten Ausführen eines Bremsvorgangs, umfassend die Schritte:

   - Erfassen der Fahrsituation
   - Simulieren des Drucks (BP_SIM) in Abhängigkeit der Fahrsituation, wobei

   das Simulieren des Drucks (BP_SIM) die Schritte umfasst:

   - Initialisieren des Drucks (BP_Sim),
   - Überprüfen und Signalisieren, ob eine Betätigungsvorrichtung betätigt wird,
   - Berechnen des Drucks (BP_SIM) in Abhängigkeit von den Fahrsituationskennwerten und der Betätigung der Betätigungsvorrichtung (LV_BLS, LV_BTS),
   - Festlegen des Drucks (BP_SIM) in Abhängigkeit der durchgeführten Berechnung,

   **dadurch gekennzeichnet, dass** ein fester Fahrsituationskennwert, in Abhängigkeit von dem der Druck (BP_SIM) berechnet wird, der Wert für die Verzögerung bei einer Vollbremsung ist, und vorbestimmt ist.

2. Verfahren nach Anspruch 1, **dadurch gekennzeichnet, dass** das Erfassen der Fahrsituation die Schritte umfasst:

   - Feststellen des Ausgangswertes des simulierten Drucks (BP_Sim),
   - Erfassen und Speichern von variablen Fahrsituationskennwerten und

**9**

- Definieren von festen Fahrsituationskennwerten.

3. Verfahren nach Anspruch 1 oder 2, **dadurch gekennzeichnet, dass** die Fahrsituationskennwerte ausgewählt sind aus der Gruppe umfassend:

- Saugrohrdruck (MAP);
- Bremslichtschaltersignal (LV_BLS),
- Bremsschaltersignal (LV_BTS),
- Fahrzeuggeschwindigkeit (VS),
- Umgebungsdruck (AMP).
- Fahrzeugbeschleunigung (ACC),
- Drehmoment (TQ),
- Motordrehzahl (N),
- Gang (GEAR).

4. Verfahren nach Anspruch 1 oder 2, **dadurch gekennzeichnet, dass** bei Betätigen der Betätigungsvorrichtung und somit indirekt des Brems- und/oder des Bremslichtschalters die Fahrzeuggeschwindigkeit überwacht wird und mindestens ein variabler Fahrsituationskennwert für den optimierten Bremsvorgang berechnet.

5. Verfahren nach Anspruch 4, **dadurch gekennzeichnet, dass** der variable Fahrsituationskennwert die Verzögerung ist.

6. Verfahren nach Anspruch 3 oder 5, **dadurch gekennzeichnet, dass** bei aktiviertem Bremsschalter in Abhängigkeit von der Verzögerung der simulierte Druck (BP_SIM) erhöht wird.

7. Verfahren nach einem der vorherigen Ansprüche 1 bis 6, **dadurch gekennzeichnet, dass** bei Unterschreiten der Fahrzeuggeschwindigkeit unter einen Grenzwert bei Aktivieren der Betätigungsvorrichtung eine Druckerhöhung entsprechend einer Vollbremsung simuliert wird.

8. Verfahren nach einem der vorherigen Ansprüche 1 bis 7, **dadurch gekennzeichnet, dass** wenn der simulierte Druck (BP_SIM) in dem Bremskraftverstärker grösser als der Saugrohrdruck in dem Saugrohr wird, der simulierte Druck (BP_SIM) auf das Saugrohrdruckniveau herabgesetzt wird.

9. Verfahren zum Betreiben einer Bremsanlage für ein Kraftfahrzeug mit einem drucksensorlosen Bremskraftverstärker, **dadurch gekennzeichnet, dass** zur Berechnung des simulierten Drucks (BP_SIM) in dem Bremskraftverstärker ein Verfahren gemäß den vorstehenden Ansprüchen 1 bis 8 umfasst ist, um einen optimierten Bremsvorgang auszuführen.

10. Bremskraftverstärker, **gekennzeichnet durch** Mittel zur Durchführung des Verfahrens nach einem der vorhergehenden Ansprüche.

**Claims**

1. A method for pressure-sensor-free determination of a pressure in a brake booster actuated by means of an actuating apparatus for a motor vehicle having an engine system comprising an intake manifold subjected to an intake manifold pressure for the optimized performance of a braking process, comprising the following steps:

- detection of the driving situation;
- simulation of the pressure (BP_SIM) depending on the driving situation, wherein the simulation of the pressure (BP_SIM) comprises the following steps:

- initializing the pressure (BP_SIM);
- checking and signaling whether an actuating apparatus is actuated;
- calculating the pressure (BP_SIM) depending on the characteristic values of the driving situation and the actuation of the actuating apparatus (LV_BLS, LV_BTS);
- determination of the pressure (BP_SIM) depending on the performed calculation;

**characterized in that** a fixed characteristic value of the driving situation, depending on which the pressure (BP_SIM) is calculated, is the value for the deceleration in full braking, and is predetermined.

2. A method according to claim 1, **characterized in that** the detection of the driving situation comprises the following steps:

   - determination of the initial value of the simulated pressure (BP_SIM);
   - detecting and storing variable characteristic values for the driving situation, and
   - defining fixed characteristic values of the driving situation.

3. A method according to claim 1 or 2, **characterized in that** the characteristic values of the driving situation are chosen from the group comprising:

   - intake manifold pressure (MAP);
   - brake light switch signal (LV_BLS);
   - brake switch signal (LV-BTS);
   - vehicle speed (VS);
   - ambient pressure (AMP);
   - vehicle acceleration (ACC);
   - torque (TQ);
   - engine speed (N);
   - gear (GEAR).

4. A method according to claim 1 or 2, **characterized in that** the vehicle velocity is monitored upon actuating the actuating apparatus and therefore indirectly the brake and/or brake light switch, and at least one variable characteristic value of the driving situation is calculated for the optimized braking process.

5. A method according to claim 4, **characterized in that** the variable characteristic value of the driving situation is the deceleration.

6. A method according to claim 3 or 5, **characterized in that** the simulated pressure (BP_SIM) is increased with activated brake switch depending on the deceleration.

7. A method according to one of the preceding claims 1 to 6, **characterized in that** a pressure increase according to full braking is simulated when the vehicle velocity falls beneath a limit value when the actuating apparatus is activated.

8. A method according to one of the preceding claims 1 to 7, **characterized in that** the simulated pressure (BP_SIM) is reduced to the intake manifold pressure level when the simulated pressure (BP_SIM) in the brake booster becomes higher than the intake manifold pressure in the intake manifold.

9. A method for operating a braking system for a motor vehicle with a pressure-sensor-free brake booster, **characterized in that** a method according to the above claims 1 to 8 is comprised for calculating the simulated pressure (BP_SIM) in the brake booster in order to carry out an optimized braking process.

10. A brake booster, **characterized by** means for carrying out the method according to one of the preceding claims.


**Revendications**

1. Procédé pour la détermination sans capteurs de pression d'une pression dans un amplificateur d'effort de freinage actionné au moyen d'un dispositif d'actionnement pour un véhicule à moteur avec une installation de moteur comprenant un tuyau d'aspiration soumis à une pression dans le tuyau d'aspiration pour l'exécution optimisée d'une opération de freinage, comprenant les étapes de :

   - détection de la situation de marche ;
   - simulation de la pression (BP_SIM) en fonction de la situation de marche,

   la simulation de la pression (BP_SIM) comprenant les étapes de :

- initialisation de la pression (BP_Sim),
- vérification et signalement de l'actionnement du dispositif d'actionnement,
- calcul de la pression (BP_SIM) en fonction de valeurs caractéristiques de la situation de marche et de l'actionnement du dispositif d'actionnement (LV_BLS, LV_BTS),
- détermination de la pression (BP_SIM) en fonction du calcul effectué,

**caractérisé en ce qu'**une grandeur caractéristique de la situation de marche fixe, en fonction de laquelle la pression (BP_SIM) est calculée, est la valeur de décélération lors d'un freinage maximal et est prédéterminée.

2. Procédé selon la revendication 1, **caractérisé en ce que** la détection de la situation de marche comprend :

- la détermination de la valeur initiale de la pression simulée (BP_Sim),
- l'acquisition et l'enregistrement de valeurs caractéristiques de la situation de marche variables et
- la définition de valeurs caractéristiques de la situation de marche fixes.

3. Procédé selon la revendication 1 ou 2, **caractérisé en ce que** les valeurs caractéristiques de la situation de marche sont choisies dans le groupe comprenant :

- la pression dans le tuyau d'aspiration (MAP),
- le signal des commutateurs des feux de freinage (LV_BLS),
- le signal du commutateur de freinage (LV_BTS),
- la vitesse du véhicule (VS),
- la pression ambiante (AMP).
- l'accélération du véhicule (ACC),
- le couple (TQ),
- le régime du moteur (N),
- le rapport (GEAR).

4. Procédé selon la revendication 1 ou 2, **caractérisé en ce que** lors de l'actionnement du dispositif d'actionnement et ainsi, indirectement, du commutateur de freinage et/ou du commutateur des feux de freinage, la vitesse du véhicule est surveillée et au moins une valeur caractéristique de la situation de marche variable est calculée pour l'opération de freinage optimisée.

5. Procédé selon la revendication 4, **caractérisé en ce que** la valeur caractéristique de la situation de marche variable est la décélération.

6. Procédé selon la revendication 3 ou 5, **caractérisé en ce que** lorsque le commutateur de frein est activé, la pression simulée (BP_SIM) est augmentée en fonction de la décélération.

7. Procédé selon l'une des revendications 1 à 6, **caractérisé en ce que** lorsque la vitesse du véhicule est inférieure à une valeur limite lors de l'activation du dispositif d'actionnement, une augmentation de la pression correspondant à un freinage maximal est simulée.

8. Procédé selon l'une des revendications 1 à 7, **caractérisé en ce que** lorsque la pression simulée (BP_SIM) dans l'amplificateur d'effort de freinage dépasse la pression dans le tuyau d'aspiration, la pression simulée (BP_SIM) est abaissée au niveau de la pression dans le tuyau d'aspiration.

9. Procédé pour faire fonctionner une installation de freinage pour un véhicule à moteur avec un amplificateur d'effort de freinage sans capteurs de pression, **caractérisé en ce que** pour calculer la pression simulée (BP_SIM), l'amplificateur d'effort de freinage comprend un procédé selon l'une des revendications 1 à 8 afin d'exécuter une opération de freinage optimisée.

10. Amplificateur d'effort de freinage **caractérisé en ce qu'**il comprend des moyens pour la mise en oeuvre du procédé selon l'une des revendications précédentes.

## Fig. 1

## Fig. 2

## Fig. 3

1240,
1241

1210    1270

VERZ

1230,1232

MAX_VS

1220

1240,1242

BRAKE

1250

1230,1231

AMP    1260,1261

1260,1262

BP_IN

BP_OUT

12

## Fig. 4

1310, 1311    1320, 1321    1310, 1312

BRAKE_START

BTS_plus_BLS

BRAKE_STOP

1310, 1313    1310, 1314

1320,1322

**IN DER BESCHREIBUNG AUFGEFÜHRTE DOKUMENTE**

**In der Beschreibung aufgeführte Patentdokumente**

- DE 19753450 A1
- EP 1021327 B1
- EP 01270308 A2
- EP 1114762 A2
- EP 0967131 A2
- JP 2002145044 A
- JP 11036928 A